# EUROPÄISCHE PATENTSCHRIFT

(11) **EP 1 375 248 B1**
(45) Veröffentlichungstag und Bekanntmachung des Hinweises auf die Patenterteilung: **10.08.2005**
(21) Anmeldenummer: 02013350.0
(22) Anmeldetag: 19.06.2002
(51) Int. Cl.: B60P 1/44, B62D 21/02

(54) **Hubladebühne**
Loading tailgate
Hayon élévateur

(43) Veröffentlichungstag der Anmeldung: 02.01.2004
(73) Patentinhaber: Bär, Gerd, 74078 Heilbronn (DE)
(72) Erfinder: Bär, Gerd, 74078 Heilbronn (DE)
(74) Vertreter: Kohler Schmid Möbus

(56) Entgegenhaltungen:
- EP-A- 0 979 755
- EP-A- 1 036 698
- WO-A-01/76896
- DE-U- 20 102 773
- FR-A- 2 760 216
- US-A- 2 843 231

## Beschreibung

Die Erfindung geht aus von einer Hubladebühne nach der Gattung des Patentanspruchs 1.

Eine bekannte Hubladebühne dieser Art (DE 201 02 773 U1) verwendet eine jeweils aus drei Traversenträgerelementen bestehende Doppeltraverse, die beidseitig an den Längsträgern des Fahrzeugrahmens befestigt wird. Die Traversenträgerelemente haben einen U-profilförmigen Querschnitt und sind gleitend ineinander verschiebbar. Weiterhin weisen die Traversenträgerelemente längs ihrer Längsausdehnung eine Mehrzahl von Löchern auf. Über diese Löcher können die Traversenträgerelemente kraftschlüssig miteinander verbunden werden, nachdem die Länge der Traversenträgerelemente auf den Abstand der beiden Längsträger eingestellt ist. Die äußeren Traversenträgerelemente sind endseitig mit plattenförmigen Befestigungselementen abgeschlossen, die an den Längsträgern z.B. mittels Schrauben befestigt werden.

Eine gattungsgemäße Hubladebühne ist aus EP 1036698A bekannt.

Der Erfindung liegt die Aufgabe zugrunde, bei einer Hubladebühne der eingangs genannten Art die Traverse einfacher auszubilden und die Herstellungskosten zu reduzieren.

Diese Aufgabe wird durch die in den Patentansprüchen aufgeführten Merkmale gelöst.

Die Erfindung hat den wesentlichen Vorteil, dass mit dem Traversenrohr und den Befestigungswinkeln handelsübliche Standardteile verwendet werden können, die miteinander zu einer biegesteifen Einheit verschraubt werden. Das Traversenrohr braucht nur gebohrt zu werden, während die insbesondere identischen Befestigungswinkel aus Blech durch Lasern und Biegen einfach herzustellen sind.

Langlöcher in den Befestigungsschenkeln ermöglichen die Anpassung der Traversenlänge an verschiedene Abstände der Längsträger, insbesondere an alle im Rahmen der Rahmenspur 1300 mm vorkommenden Steg- und Flanschabstände der Längsträger von Zentral- und Sattelachsanhängern (so genannte "Trailer"), deren Fahrzeugrahmen aus zwei doppel-T-förmigen Längsträgern bestehen. Die Verbindung von Traversenrohr, Befestigungswinkeln und bei einer unterfahrbaren Hubladebühne auch von deren Führungswerk kann durch eine bzw. zwei Schraubenverbindungen pro Seite zu einer für alle Stegbreiten biegesteifen Einheit zusammengefasst werden.

Unten an den Traversenrohren befestigte Distanzrohre ermöglichen, dass die erfindungsgemäße Hubladebühne um die Höhe des Distanzrohres tiefer oder auch höher als das Normalniveau montiert werden kann. Damit ist sichergestellt, dass das vorgeschriebene Maß der den Unterfahrschutz bildenden Plattform der Hubladebühne eingehalten wird. Erfahrungsgemäß genügt eine Rohrhöhe, aber selbstverständlich kann auch eine zweite Rohrhöhe zur Anpassung an gegebene Notwendigkeiten verwendet werden. Die Distanzrohre lassen sich durch Sägen und Bohren einfach herstellen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch die Seitenansicht der unter die Längsträger eines Fahrzeugrahmens verfahrenen erfindungsgemäßen Hubladebühne;
- Fig. 2: die Rückansicht der Hubladebühne der Fig. 1;
- Fig. 3: eine Traverse der erfindungsgemäßen Hubladebühne;
- Fig. 4: den Schnitt durch die Traverse gemäß IV-IV in Fig. 3;
- Fig. 5: die Traverse der Fig. 4 zusätzlich mit einem Distanzrohr;
- Fig. 6: einen Halbschnitt durch die am Längsträger des Fahrzeugrahmens befestigte Traverse der Fig. 3;
- Fig. 7: die Anordnung der Fig. 6 mit einem unten an der Traverse befestigten Distanzrohr, an dem die Führungsschiene eines Führungswerks der Hubladebühne befestigt ist; und
- Fig. 8: die Anordnung der Fig. 6 mit einem unten an der Traverse und seitlich am Längsträger des Fahrzeugrahmens befestigten Distanzrohr.

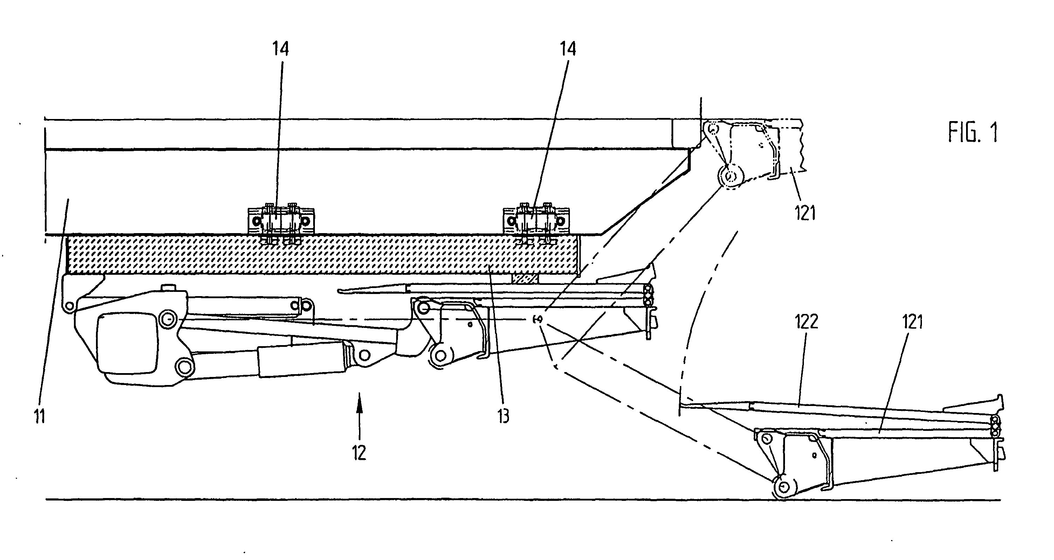

**Fig. 1** zeigt den Anbau einer unterfahrbaren Hubladebühne **12** am Ende eines Fahrzeugrahmens in ihrer unter die doppel-T-förmigen Längsträger **11** des Fahrzeugrahmens verfahrenen Fahr- oder Verstaustellung. Zur Inbetriebnahme wird die Hubladebühne 12 nach hinten ausgefahren, wobei diese ausgefahrene Position nur mit den gestrichelten Mittelachsen ihres parallelogrammförmigen Hubwerks dargestellt ist. Über den Längsträgern 11 liegt der nicht näher bezeichnete Ladeboden des Fahrzeugs. Die beiden Führungsschienen **13** des Führungswerks, in dem die Hubladebühne 12 ausfahrbar gelagert ist, liegen auf Höhe der Unterkante der Längsträger 11. Am parallelogrammförmigen Hubwerk ist ein Festteil **121** der Hubladebühnenplattform angelenkt, deren Plattformspitze als Faltteil **122** am Festteil 121 schwenkbar gelagert ist. In Fig. 1 ist die Plattform in ihrer oberen Position mit dem (abgebrochenen) Festteil 121 auf Ladebodenhöhe sowie am Boden mit nicht ausgefaltetem Faltteil 122 gezeigt. Über zwei beabstandeten Traversen **14** ist die Hubladebühne 12 an den Längsträgern 11 befestigt.

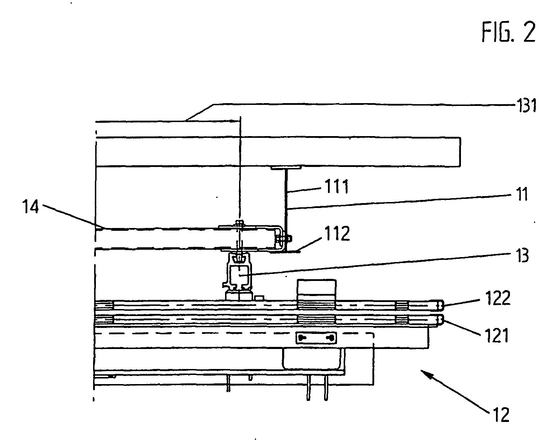

Wie in **Fig. 2** gezeigt, liegt die Traverse 14 sowohl am Steg **111** des Längsträgers 11 an als auch auf dem Flansch **112** des Längsträgers 11 auf. An den Traversen 14 sind die Führungsschienen 13 zum Verfahren der Hubladebühne 12 befestigt, die im Ausführungsbeispiel einen Führungswerksmittenabstand **131** von 990 mm haben.

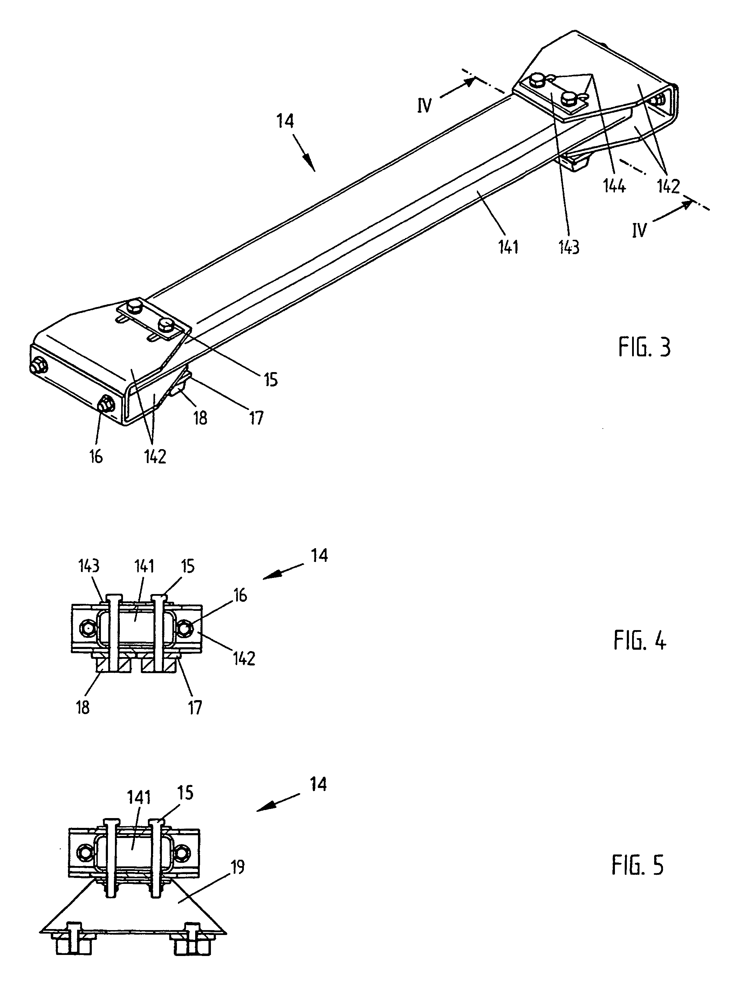

**Fig. 3** zeigt die Traverse 14 als losgelöste Baugruppe. Die Traverse 14 umfasst ein Traversenrohr **141** und jeweils zwei Befestigungswinkel **142** an beiden Rohrenden. Im Ausführungsbeispiel ist das Traversenrohr 141 ein Rechteckrohr (140 x 70 mm²) mit zwei durchgehenden Traversenbohrungen an jedem Rohrenden. Die mit ihren ca. 215 mm langen Langschenkeln am Traversenrohr 141 anliegenden Befestigungswinkel 142 sind durch vertikale Schrauben **15** am Traversenrohr 141 befestigt, wobei die Schrauben 15 durch Langlöcher **144** (ca. 35 mm lang) in den langen Schenkeln sowie durch die Traversenbohrungen hindurchgehen. Der Längsabstand der Traversenbohrungen und damit der Schrauben 15 entspricht dem Führungswerkmittenabstand 131. Zur sicheren Auflage der Schraubenköpfe der Schrauben 15 ist eine Druckplatte **143** vorgesehen. Die Langlöcher 144 dienen nicht nur dem Breitenausgleich, sondern sind so dimensioniert, dass trotz Hintereinanderanordnung der kurzen Schenkel der Befestigungswinkel 142 diese identisch ausgebildet sein können.

**Fig. 4** zeigt den Schnitt durch das Traversenrohr 141 im Bereich der Schrauben 15, die durch ein Ausgleichsprofil **17** hindurch in einen Nutenstein **18** eingeschraubt sind. Das Ausgleichsprofil 17 hat im Wesentlichen die Funktion wie die Druckplatte 143.

In **Fig. 5** ist unten am Traversenrohr 141 mittels der Schrauben 15 noch ein rechteckiges Distanzrohr **19** als Abstandshalter zum nicht gezeigten Führungswerk befestigt.

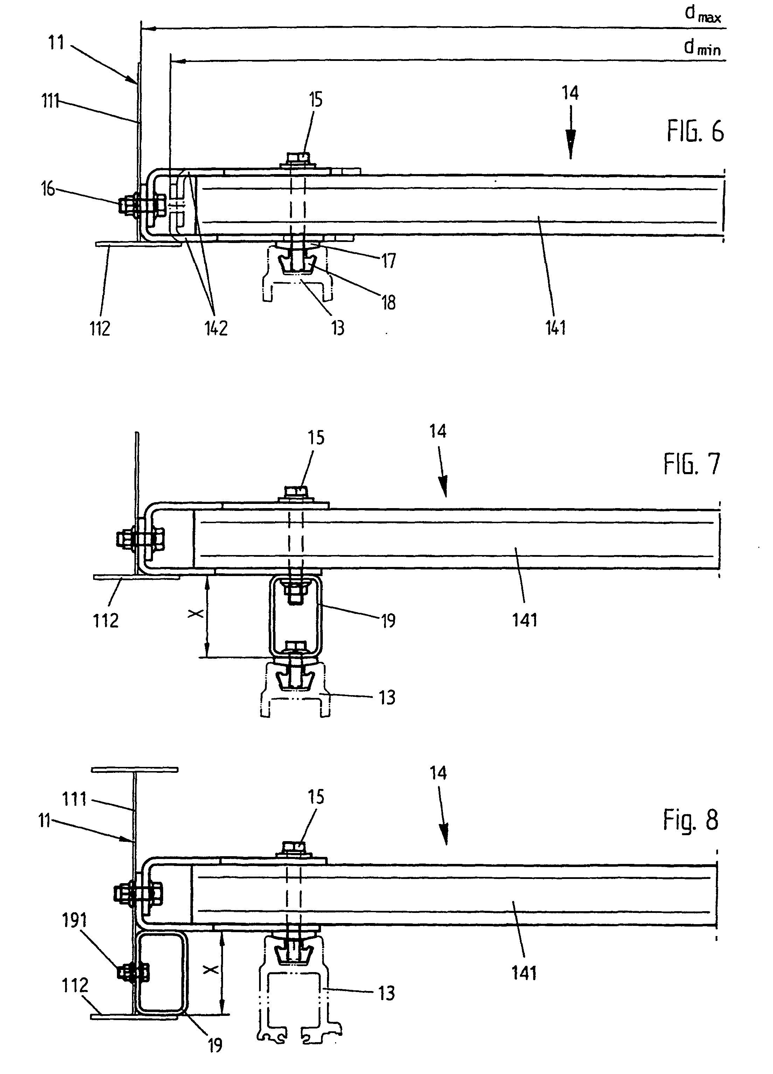

**Fig. 6** zeigt den Querschnitt des unteren Teils des Längsträgers 11 und einen teilweisen Halbschnitt der Traverse 14. Diese ist durchgezeichnet auf den maximalen Stegabstand dₘₐₓ der beiden Längsträger 11 von z.B. 1360 mm, während der minimale Stegabstand dₘᵢₙ von z.B. 1290 mm gestrichelt gezeichnet ist. Die Traverse 14 liegt mit ihren Befestigungswinkeln 142 auf dem Flansch 112 des Längsträgers 11 auf, wobei die ca. 70 mm langen Kurzschenkel der beiden Befestigungswinkel 142 mittels zweier Stegschrauben **16** am Steg 111 des Längsträgers 11 festgeschraubt sind. Durch die Schraubenkräfte der Stegschrauben 16 und der Schrauben 15 bilden die beiden Befestigungswinkel 142 zusammen mit dem Traversenrohr 141 eine ausreichend biegesteife Einheit.

**Fig. 7** zeigt die Verbindung des rechteckigen Distanzrohres 19 zwischen der Traverse 14 und der Führungsschiene 13. Die tiefere Position der Führungsschiene 13 und damit der Hubladebühne 12 entspricht dem Maß X des Distanzrohres 19 (z.B. 100 mm).

Bei der Ausführung nach **Fig. 8** liegt das rechteckige Distanzrohr 19 zwischen dem Flansch 112 und der Traverse 14, wobei das Distanzrohr 19 durch die Schraube **191** am Steg 111 des Längsträgers 11 befestigt ist. Die höhere Position der Führungsschiene 13 und damit der Hubladebühne 12 entspricht dem Maß X des Distanzrohres 19. Das Distanzrohr 19 kann so gestaltet sein, dass es die Anforderungen der Fign. 7 und 8 gleichzeitig erfüllt.

## Patentansprüche

1. Hubladebühne (12) mit einer Traverse (14) zur Befestigung an zwei voneinander beabstandeten Längsträgern (11) eines Fahrzeugrahmens, **dadurch gekennzeichnet,**
**dass** die bzw. jede Traverse (14) ein Traversenrohr (141) und an jedem Rohrende zwei Befestigungswinkel (142) aufweist, deren eine Schenkel oben bzw. unten an das Traversenrohr (141) angeschraubt sind (15) und deren andere das Traversenrohr (141) umgreifende Schenkel miteinander verschraubt (16) sind.

2. Hubladebühne nach Anspruch 1, **dadurch gekennzeichnet, dass** die Befestigungswinkel (142) identisch ausgebildet sind.

3. Hubladebühne nach Anspruch 1 oder 2, **dadurch gekennzeichnet, dass** die beiden Befestigungswinkel (142) über mindestens eine vertikal durchgehende Schraube (15) mit dem Traversenrohr (141) zu einer Einheit verschraubt sind.

4. Hubladebühne nach einem der vorhergehenden Ansprüche, **dadurch gekennzeichnet, dass** die mindestens eine vertikale Schraube (15), mit der der untere Befestigungswinkel (142) an das Traversenrohr (141) angeschraubt ist, auch die Hubladebühne (12), insbesondere die Führungsschienen (13) eines Führungswerks einer unterfahrbaren Hubladebühne, trägt.

5. Hubladebühne nach einem der vorhergehenden Ansprüche, **dadurch gekennzeichnet, dass** die Befestigungswinkel (142) über Langlöcher (144), welche sich in Längsrichtung des Traversenrohrs (141) erstrecken, an das Traversenrohr (141) angeschraubt sind.

6. Hubladebühne nach einem der vorhergehenden Ansprüche, **dadurch gekennzeichnet, dass** die bzw. jede Traverse (141) beidseitig jeweils über die mindestens eine horizontale Schraube (16), mit der die beiden Befestigungswinkel (142) miteinander verschraubt sind, an einen vertikalen Steg (111) der Längsträger (11) anschraubbar ist.

7. Hubladebühne nach einem der vorhergehenden Ansprüche, **dadurch gekennzeichnet, dass** unten an der bzw. jeder Traverse (14) Distanzrohre (19) angeschraubt sind.

8. Hubladebühne nach Anspruch 7, **dadurch gekennzeichnet, dass** die Distanzrohre (19) zwischen der Traverse (14) und der Hubladebühne (12), insbesondere den Führungsschienen (13) eines Führungswerks einer unterfahrbaren Hubladebühne (12), vorgesehen sind.

9. Hubladebühne nach Anspruch 7, **dadurch gekennzeichnet, dass** die Distanzrohre (19) seitlich jeweils bündig mit dem äußeren der beiden Befestigungswinkel (142) angeordnet sind.

10. Hubladebühne nach einem der vorhergehenden Ansprüche, **dadurch gekennzeichnet, dass** der Abstand der beiden Führungsschienen (13) des Führungswerks einer unterfahrbaren Hubladebühne (12) kleiner als der lichte Abstand der beiden Längsträger (11) ist.

## Claims

1. Loading tailgate (12) comprising a traverse (14) for mounting to two mutually spaced longitudinal supports (11) of a vehicle frame,
**characterized in that**
the or each traverse (14) comprises a traverse tube (141) and each tube end comprises two angle brackets (142), the first legs thereof being screwed (15) to the top and to the bottom, respectively, of the traverse tube (141), and the other legs surrounding the traverse tube (141) being screwed (16) to each other.

2. Loading tailgate according to claim 1, **characterized in that** the angle brackets (142) are identically designed.

3. Loading tailgate according to claim 1 or 2, **characterized in that** the two angle brackets (142) are screwed, via at least one vertically continuous screw (15), to the traverse tube (141) to form a unit.

4. Loading tailgate according to any one of the preceding claims, **characterized in that** the at least one vertical screw (15), which screws the lower angle bracket (142) to the traverse tube (141), also supports the loading tailgate (12), in particular, the guiding rails (13) of a guiding mechanism of a retractable loading tailgate.

5. Loading tailgate according to any one of the preceding claims, **characterized in that** the angle brackets (142) are screwed to the traverse tube (141) via elongated holes (144) which extend in the longitudinal direction of the traverse tube (141).

6. Loading tailgate according to any one of the preceding claims, **characterized in that** both sides of the or each traverse (141) can each be screwed to a vertical bar (111) of the longitudinal supports (11) via the at least one horizontal screw (16) which screws the two angle brackets (142) to each other.

7. Loading tailgate according to any one of the preceding claims, **characterized in that** distance tubes (19) are screwed to the bottom of the or each traverse (14).

8. Loading tailgate according to claim 7, **characterized in that** the distance tubes (19) are provided between the traverse (14) and the loading tailgate (12), in particular, the guiding rails (13) of a guiding mechanism of a retractable loading tailgate (12).

9. Loading tailgate according to claim 7, **characterized in that** the sides of the distance tubes (19) are each aligned to the outer one of the two angle brackets (142).

10. Loading tailgate according to any one of the preceding claims, **characterized in that** the distance between the two guiding rails (13) of the guiding mechanism of a retractable loading tailgate (12) is smaller than the clearance between the two longitudinal supports (11).

## Revendications

1. Hayon élévateur (12) comportant une traverse (14) pour la fixation sur deux longerons (11), écartés l'un de l'autre, d'un châssis de véhicule, **caractérisé en ce que** la ou chaque traverse (14) comporte une partie tubulaire (141) et, à chaque extrémité de celle-ci, deux cornières de fixation (142), avec des branches vissées (15) respectivement en haut et en bas sur la partie tubulaire (141) et des branches engagées autour de la partie tubulaire (141) vissées (16) l'une avec l'autre.

2. Hayon élévateur selon la revendication 1,
**caractérisé en ce que** les cornières de fixation (142) sont conçues de manière identique.

3. Hayon élévateur selon la revendication 1 ou 2,
**caractérisé en ce que** les deux cornières de fixation (142) sont vissées avec la partie tubulaire (141) par au moins une vis verticale (15) traversante, en vue de former une unité.

4. Hayon élévateur selon l'une quelconque des revendications précédentes, **caractérisé en ce que** ladite au moins une vis verticale (15), par laquelle la cornière de fixation (142) inférieure est vissée avec la partie tubulaire (141), porte également le hayon élévateur (12), en particulier les rails de guidage (13) d'un mécanisme de guidage d'un hayon élévateur rétractable.

5. Hayon élévateur selon l'une quelconque des revendications précédentes, **caractérisé en ce que** les cornières de fixation (142) sont vissées avec la partie tubulaire (141) par l'intermédiaire de trous oblongs (144), qui s'étendent dans le sens longitudinal de la partie tubulaire (141).

6. Hayon élévateur selon l'une quelconque des revendications précédentes, **caractérisé en ce que** la ou chaque traverse (141) peut être vissée des deux côtés avec une barre verticale (111) des longerons (11), respectivement par l'intermédiaire ladite au moins une vis horizontale (16), par laquelle les deux cornières de fixation (142) sont vissées l'une à l'autre.

7. Hayon élévateur selon l'une quelconque des revendications précédentes, **caractérisé en ce que** des tubes d'écartement (19) sont vissés en bas contre la ou chaque traverse (14).

8. Hayon élévateur selon la revendication 7,
**caractérisé en ce que** les tubes d'écartement (19) sont prévus entre la traverse (14) et le hayon élévateur (12), en particulier les rails de guidage (13) d'un mécanisme de guidage d'un hayon élévateur (12) rétractable.

9. Hayon élévateur selon la revendication 7,
**caractérisé en ce que** les tubes d'écartement (19) sont agencés latéralement respectivement en surface affleurée avec la cornière extérieure parmi les deux cornières de fixation (142).

10. Hayon élévateur selon l'une quelconque des revendications précédentes, **caractérisé en ce que** la distance entre les deux rails de guidage (13) du mécanisme de guidage d'un hayon élévateur (12) rétractable est inférieure à la distance intérieure entre les deux longerons (11).
